(19) Europäisches Patentamt
European Patent Office
Office européen des brevets

(11) **EP 4 002 223 A1**

(12) **DEMANDE DE BREVET EUROPEEN**

(43) Date de publication:
**25.05.2022   Bulletin 2022/21**

(21) Numéro de dépôt: **21208259.8**

(22) Date de dépôt: **15.11.2021**

(51) Classification Internationale des Brevets (IPC):
*G06N 3/08* [(2006.01)]     *G06N 3/063* [(2006.01)]
*G06N 3/04* [(2006.01)]

(52) Classification Coopérative des Brevets (CPC):
**G06N 3/084; G06N 3/04; G06N 3/063**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **24.11.2020   FR 2012081**

(71) Demandeur: **STMicroelectronics (Rousset) SAS 13790 Rousset (FR)**

(72) Inventeurs:
• **DEMAJ, Pierre**
  **06200 Nice (FR)**
• **FOLLIOT, Laurent**
  **06620 Gourdon (FR)**

(74) Mandataire: **Casalonga
Casalonga & Partners
Bayerstraße 71/73
80335 München (DE)**

(54)   **PROCÉDÉ DE MISE À JOUR D'UN RÉSEAU DE NEURONES ARTIFICIEL**

(57)      Selon un aspect, il est procédé de mise à jour d'un réseau de neurones artificiel comportant des poids initiaux stockés dans une mémoire (MEM) selon au moins un format en entier, procédé comprenant :
- une détermination par une unité de traitement (UT) des gradients d'erreur en sortie des couches du réseau de neurones,
- une récupération par l'unité de traitement (UT) des poids initiaux dans la mémoire (MEM),
- une mise à jour des poids initiaux par l'unité de traitement (UT) comprenant, pour chaque poids initial, un premier calcul d'un poids corrigé dans le format en entier de ce poids initial,
- un remplacement par l'unité de traitement (UT) de la valeur des poids initiaux stockés dans la mémoire (MEM) par la valeur des poids corrigés.

[Fig 1]

EP 4 002 223 A1

**Description**

Des modes de réalisation et de mise en œuvre concernent les réseaux de neurones artificiels, et plus particulièrement la mise à jour des poids des couches d'un réseau de neurones artificiel après avoir implanté ce réseau de neurones dans une plateforme matérielle finale.

Les réseaux de neurones artificiels sont utilisés pour réaliser des fonctions données lorsqu'ils sont exécutés. Par exemple, une fonction d'un réseau de neurones peut être une classification. Une autre fonction peut consister à générer un signal à partir d'un signal reçu en entrée.

Les réseaux de neurones artificiels comprennent généralement une succession de couches de neurones.

Chaque couche prend en entrée des données auxquelles des poids sont appliqués et délivre en sortie des données de sortie après traitement par des fonctions d'activation des neurones de ladite couche. Ces données de sortie sont transmises à la couche suivante dans le réseau de neurones.

Les poids sont des paramètres configurables pour obtenir de bonnes données de sortie.

Les réseaux de neurones peuvent par exemple être mis en œuvre par des plateformes matérielles finales, telles que des microcontrôleurs intégrés dans des objets connectés.

Les réseaux de neurones sont généralement entraînés lors d'une phase d'apprentissage avant d'être intégré dans la plateforme matérielle finale. La phase d'apprentissage peut être supervisée ou non.

La phase d'apprentissage permet d'ajuster les poids du réseau de neurones pour obtenir de bonnes données en sortie du réseau de neurones. Pour ce faire, le réseau de neurones peut être exécuté en prenant en entrée des données déjà classifiées d'une base de données de référence. Les poids sont adaptés en fonction des données obtenues en sortie du réseau de neurones par rapport à des données attendues.

En outre, avant d'être intégré dans une plateforme matérielle, le réseau de neurones peut être quantifié pour pouvoir accélérer son exécution et réduire ses besoins en mémoire. En particulier, la quantification du réseau de neurones peut consister à modifier le format des données du réseau de neurones, telles que les poids, pouvant être en un format en virgule flottante, vers un format en entier.

Quantifier le réseau de neurones permet d'obtenir un réseau de neurones plus léger. Un tel réseau de neurones peut être exécuté rapidement par de nombreuses plateformes matérielles, par exemple par des microcontrôleurs.

Par ailleurs, dans certaines applications, il peut être avantageux de prévoir des mises à jour des poids des couches après avoir implanté le réseau de neurones dans la plateforme matérielle finale.

En effet, par exemple, il peut s'avérer que le réseau de neurones ait été entraîné à partir de données non représentatives de l'environnement dans lequel le réseau de neurones est mis en œuvre après avoir été implanté dans la plateforme matérielle.

Ainsi, l'adaptation des poids effectuée lors de la phase d'apprentissage peut ne pas être optimale pour l'environnement dans lequel le réseau de neurones est mis en œuvre.

La mise à jour des poids du réseau de neurones permet donc d'adapter le réseau de neurones pour l'environnement dans lequel il est utilisé.

La mise à jour des poids peut être effectuée par une méthode de rétropropagation de gradient (en anglais « back propagation »), bien connue de l'homme du métier. Cette méthode utilise un format des poids en virgule flottante. En particulier, les poids du réseau de neurones représentés en entier sont convertis afin d'obtenir un format des poids en virgule flottante. Le fait d'effectuer la rétropropagation du gradient, en utilisant des poids en virgule flottante peut nécessiter des ressources en mémoire importantes.

Ainsi, il peut être nécessaire de mettre à jour des poids du réseau de neurones en utilisant un serveur distant lorsque la plateforme matérielle finale ne présente pas des ressources suffisantes pour effectuer cette mise à jour.

Le réseau de neurones mis à jour est ensuite quantifié de façon à obtenir un format des poids en entier.

Le réseau de neurones quantifié mis à jour est ensuite transmis à la plateforme matérielle finale, notamment via le réseau Internet en utilisant une transmission sans fil.

Ainsi, les ressources en mémoire demandées ne permettent pas toujours à la plateforme matérielle finale d'effectuer elle-même la mise à jour. En outre, la consommation d'énergie pour transmettre le réseau de neurones quantifié mis à jour à la plateforme matérielle est élevée pour la plateforme matérielle. Or, la plateforme matérielle possède généralement une quantité d'énergie limitée.

En outre, le fait de convertir les poids dans un format en virgule flottante pour effectuer la rétropropagation du gradient est coûteux en mémoire.

Il existe donc un besoin de proposer un procédé permettant de mettre à jour un réseau de neurones directement par la plateforme matérielle finale.

Selon un aspect, il est proposé un procédé de mise à jour d'un réseau de neurones artificiel comportant des poids initiaux stockés dans une mémoire selon au moins un format en entier, procédé comprenant :

- une détermination par une unité de traitement des gradients d'erreur en sortie des couches du réseau de neurones,

- une récupération par l'unité de traitement des poids initiaux dans la mémoire,
- une mise à jour des poids initiaux par l'unité de traitement comprenant, pour chaque poids initial, un premier calcul d'un poids corrigé, dans le format en entier de ce poids initial, selon la formule :

$$w_{q\,ij\,corr}^{(l)} = w_{q\,ij}^{(l)} + round\left(\frac{\lambda}{Scale(n)}\sum\frac{dE}{dw(l)ij}\right),$$

où $w_{q\,ij\,corr}^{(l)}$ est la valeur du poids corrigé, $w_{q\,ij}^{(l)}$ est la valeur du poids initial, $\lambda$ est un taux d'apprentissage, Scale(n) est un pas de quantification du poids, $\sum\frac{dE}{dw(l)ij}$ est une somme des gradients d'erreur par rapport aux poids, et la fonction round() est un arrondi à un entier supérieur ou inférieur,

- un remplacement par l'unité de traitement de la valeur des poids initiaux stockés dans la mémoire par la valeur des poids corrigés.

Ainsi, chaque poids est mis à jour en lui ajoutant un arrondi de la somme des gradients d'erreur par rapport aux poids multiplié par un rapport entre le taux d'apprentissage $\lambda$ et le pas de quantification utilisé pour représenter les poids initiaux.

Le calcul effectué pour la mise à jour des poids permet d'obtenir des poids directement en entier.

Un tel procédé de mise à jour permet donc d'éviter de passer par un format de poids en virgule flottante.

De ce fait, les ressources en mémoire pour effectuer la mise à jour sont limitées.

Le procédé de mise à jour des poids peut ainsi être mis en œuvre directement par la plateforme matérielle finale qui utilise le réseau de neurones. Par exemple, un tel procédé de mise à jour des poids peut être mis en œuvre directement par un microcontrôleur.

Il est ainsi possible d'éviter d'effectuer la mise à jour des poids sur un serveur distant.

Le procédé de mise à jour des poids permet donc de limiter la consommation d'énergie, notamment lorsqu'il est mis en œuvre par la plateforme matérielle finale.

En outre, un tel procédé de mise à jour est rapide à mettre en œuvre du fait que le calcul est directement réalisé sur des poids en entier.

Une plateforme matérielle finale peut ainsi adapter régulièrement le réseau de neurones à partir de nouvelles données acquises dans un environnement dans lequel la plateforme matérielle finale est située.

De préférence, la somme des gradients d'erreur par rapport aux poids est calculée selon une méthode dite en « batch » bien connue de l'homme du métier.

Dans un mode de mise en œuvre avantageux, la mise à jour des poids initiaux est effectuée pour chaque couche du réseau de neurones à partir d'une dernière couche jusqu'à une première couche du réseau de neurones.

Dans un mode de mise en œuvre avantageux, l'arrondi utilisé pour déterminer la valeur du poids corrigé est un arrondi stochastique.

Par ailleurs, les valeurs des poids corrigés peuvent évoluer après plusieurs mises à jour des poids, et peuvent donc devenir éloignées des valeurs des poids du réseau de neurones avant la première mise à jour. Afin d'éviter une saturation des poids ou une perte de précision des poids de faible valeur, il est avantageux de quantifier de nouveau les poids corrigés.

Ainsi, dans un mode de mise en œuvre avantageux, la mise à jour des poids comprend en outre une quantification des poids corrigés.

La quantification des poids corrigés permet de maintenir de bonnes performances d'exécution du réseau de neurones.

Dans un mode de mise en œuvre avantageux, la quantification d'un poids corrigé d'une couche du réseau de neurones comprend une détermination d'un poids minimum et d'un poids maximum parmi un ensemble des poids corrigés de la couche, l'ensemble comprenant le poids corrigé à quantifier.

L'ensemble peut être l'ensemble des poids de la couche lorsque la couche est quantifiée uniformément ou bien l'ensemble des poids d'un même canal de la couche lorsque la couche est quantifiée par canal.

Dans un mode de mise en œuvre avantageux, la quantification du poids corrigé comprend en outre :

- une récupération par l'unité de traitement d'une valeur d'un point zéro associé au poids initial stockée dans la mémoire,
- une mise à jour par l'unité de traitement de la valeur d'un point zéro associé au poids corrigé en utilisant la formule :

$$Zp(n + 1) = int(clip(round\left(\frac{\max{(n)}*minq - \min{(n)}*maxq}{\max{(n)} - \min{(n)}}\right), \ minq, \ maxq)),$$

où Zp(n+1) est la valeur du point zéro mise à jour, minq et maxq sont respectivement les valeurs minimales et maximales que les poids peuvent prendre selon le format des poids, *min(n) = Scale(n).min_q(n)-Zp(n)* et max(n) = *Scale(n).max_q(n)-Zp(n)*, Zp(n) étant la valeur du point zéro stockée dans la mémoire, min_q(n) étant la valeur minimum des poids corrigés de l'ensemble de poids, max_q(n) étant la valeur maximum des poids corrigés de l'ensemble de poids, - un remplacement par l'unité de traitement de la valeur du point zéro stockée dans la mémoire par la valeur du point zéro mise à jour.

La fonction clip() est configuré pour maintenir les valeurs de l'expression *round* $\left(\frac{\max{(n)}*minq - \min{(n)}*maxq}{\max{(n)} - \min{(n)}}\right)$ dans un intervalle de valeurs [minq ; maxq].

La fonction int() permet de retourner un entier équivalent au résultat de l'expression *clip(round* $\left(\frac{\max{(n)}*minq - \min{(n)}*maxq}{\max{(n)} - \min{(n)}}\right)$, *minq, maxq)*.

Par exemple, lorsque le format des poids est non signé et asymétrique sur 8 bits, la valeur minimale minq est égale à 0 et la valeur maximale maxq est égale à 255. Lorsque le format des poids est signé et symétrique sur 8 bits la valeur minimale minq est égale à -127 et la valeur maximale maxq est égale à 127.

Dans un mode de mise en œuvre avantageux, la quantification du poids corrigé comprend en outre :

- une récupération par l'unité de traitement d'une valeur d'un pas de quantification du poids initial stocké dans la mémoire,
- une mise à jour de la valeur du pas de quantification par l'unité de traitement selon la formule :

$$Scale(n + 1) = \frac{Scale(n).(max_q(\text{n}) - min_q(\text{n}))}{maxq - minq},$$

où Scale(n+1) est la valeur du pas de quantification mis à jour, min_q(n) est la valeur minimum des poids corrigés de l'ensemble de poids, max_q(n) est la valeur maximum des poids corrigés de l'ensemble de poids, Scale(n) est la valeur du pas de quantification stocké dans la mémoire, minq et maxq sont respectivement les valeurs minimales et maximales que les poids peuvent prendre,

- un remplacement par l'unité de traitement de la valeur du pas de quantification stocké dans la mémoire par la valeur du pas de quantification mis à jour.

Dans un mode de mise en œuvre avantageux, la quantification du poids corrigé comprend un calcul d'une valeur quantifiée du poids corrigé.

En particulier, la valeur quantifiée du poids corrigé peut être calculée en utilisant la formule :

$$w_{q\,ij\,corr}^{(l)}(\text{n}+1) = \text{round}((maxq - minq).(\frac{Scale(n).w_{qijcor}^{(l)}(n) - Zp(n)}{Scale(n).(max_q(n) - min_q(n))}) + Zp(n+1)),$$

où $w_{q\,ij\,corr}^{(l)}(\text{n}+1)$ est la valeur quantifiée du poids corrigé, $w_{q\,ij\,corr}^{(l)}(\text{n})$ est la valeur du poids corrigé obtenue selon le premier calcul, min_q(n) est la valeur minimum des poids corrigés de l'ensemble de poids, max_q(n) est la valeur maximum des poids corrigés de l'ensemble de poids, minq et maxq sont respectivement les valeurs minimales et maximales que les poids peuvent prendre selon le format des poids, Scale(n) est l'ancienne valeur du pas de quantification stockée dans la mémoire, Zp(n+1) est la valeur du point zéro mise à jour et Zp(n) est l'ancienne valeur du point zéro stockée dans la mémoire.

Néanmoins, lorsque la quantification est symétrique, la valeur quantifiée du poids corrigé peut être calculée, en utilisant la formule :

$$w_{q\,ij\,corr}^{(l)}(n+1) = \text{round}\left(\frac{(2^{N-1}-1) * w_{q\,ij\,corr}^{(l)}(n)}{\max\,(|max_q(n)|,|\,min_q(n)|)}\right),$$

où $w_{q\,ij\,corr}^{(l)}(n+1)$ est la valeur quantifiée du poids corrigé, $w_{q\,ij\,corr}^{(l)}(n)$ est la valeur du poids corrigé obtenue selon le premier calcul, $min_q(n)$ est la valeur minimum des poids corrigés de l'ensemble de poids, $max_q(n)$ est la valeur maximum des poids corrigés de l'ensemble de poids, et N est le nombre du bit du format des poids (par exemple 8 bits).

De préférence, les valeurs pouvant être prises par l'expression $\frac{1}{\max\,(|max_q(n)|,|\,min_q(n)|)}$ pour chaque valeur possible de l'expression $\max\,(|max_q(n)|,|\,min_q(n)|)$ sont enregistrées dans une table de correspondance stockée dans la mémoire.

Par ailleurs, chaque couche du réseau de neurones peut être quantifiée uniformément, on parle alors de quantification par couche (en anglais « per-layer quantization »), ou bien peut être quantifiée différemment pour chaque canal de la couche, on parle alors de quantification par canal (en anglais « per-channel quantization »).

Or, lors de la mise à jour des poids, il peut être avantageux d'adapter le type de quantification, par couche ou par canal, des couches du réseau de neurones de façon à améliorer l'exécution du réseau de neurones.

En particulier, lors de la phase d'apprentissage, le réseau de neurones est quantifié par couche ou par canal en fonction des résultats de l'apprentissage.

En général, la quantification par canal permet d'obtenir une meilleure précision du réseau de neurones pour une légère augmentation du temps d'exécution du réseau de neurones. En effet, l'exécution d'une couche quantifiée par canal est généralement effectuée sur un plus grand nombre de cycles d'horloge que pour une couche quantifiée uniformément.

Néanmoins, dans certains cas la quantification par canal et la quantification par couche permettent d'obtenir une précision équivalente. Ainsi, dans ce cas, il peut être avantageux d'utiliser une quantification par couche de façon à permettre une réduction du temps d'exécution du réseau de neurones.

Ainsi, dans un mode de mise en œuvre avantageux, le procédé comprend en outre, pour chaque couche, les étapes suivantes exécutées par l'unité de traitement :

- un calcul d'un critère de décision, puis
- une comparaison du critère de décision à une valeur seuil, puis
- la quantification des poids corrigés qui est effectuée uniformément pour chaque poids corrigé de la couche ou indépendamment par canal de la couche selon un résultat de la comparaison.

Dans un mode de mise en œuvre avantageux, le critère de décision est calculé selon la formule :

$$C0 = \frac{Scale_l(n+1)}{\min\,(Scale_c(n+1))},$$

où $Scale_l(n+1)$ est un pas de quantification pouvant être défini pour l'ensemble de la couche et $\min\,(Scale_c(n+1))$ est un pas de quantification le plus petit parmi des pas de quantification pouvant être définis pour chaque canal de la couche.

Dans un mode de mise en œuvre avantageux, pour une couche initialement quantifiée uniformément, si le critère de décision est supérieur ou égal à une valeur seuil comprise entre six et dix, alors la quantification des poids corrigés est effectuée selon une quantification par canal.

Dans un mode de mise en œuvre avantageux, pour une couche initialement quantifiée par canal, si le critère de décision est inférieur ou égal à une valeur seuil supérieure à un et inférieure ou égale à quatre, alors la quantification des poids corrigés est effectuée selon une quantification uniforme pour chaque poids corrigés de la couche.

Selon un autre aspect, il est proposé un microcontrôleur comprenant :

- une mémoire configurée pour stocker des poids initiaux des couches d'un réseau de neurones selon au moins un format en entier donné,
- une unité de traitement configurée pour effectuer :

o une détermination des gradients d'erreur en sortie des couches du réseau de neurones,
o une récupération des poids initiaux dans la mémoire,

o une mise à jour des poids initiaux comprenant, pour chaque poids initial, un premier calcul d'un poids corrigé, dans le format en entier de ce poids initial, selon la formule :

$$w^{(l)}_{q\,ij\,corr} = w^{(l)}_{q\,ij} + round\left(\frac{\lambda}{Scale(n)}\sum\frac{dE}{dw(l)ij}\right),$$

où $w^{(l)}_{q\,ij\,corr}$ est la valeur du poids corrigé, $w^{(l)}_{q\,ij}$ est la valeur du poids initial, $\lambda$ est un taux d'apprentissage, Scale(n) est un pas de quantification du poids, $\sum\frac{dE}{dw(l)ij}$ est une somme des gradients d'erreur par rapport aux poids, et la fonction round() est un arrondi à un entier supérieur ou inférieur,

o un remplacement de la valeur des poids initiaux stockés dans la mémoire par la valeur des poids corrigés.

Avantageusement, le microcontrôleur comprend donc une mémoire configurée pour stocker des poids initiaux des couches d'un réseau de neurones selon au moins un format en entier donné, et une unité de traitement configurée pour mettre en œuvre le procédé décrit précédemment.

Selon un autre aspect, il est proposé un produit programme d'ordinateur comprenant des instructions qui, lorsque le programme est exécuté par une unité de traitement, conduisent celle-ci à mettre en œuvre le procédé décrit précédemment.

D'autres avantages et caractéristiques de l'invention apparaîtront à l'examen de la description détaillée de modes de mise en œuvre et de réalisation, nullement limitatifs, et des dessins annexés sur lesquels :

[Fig 1]

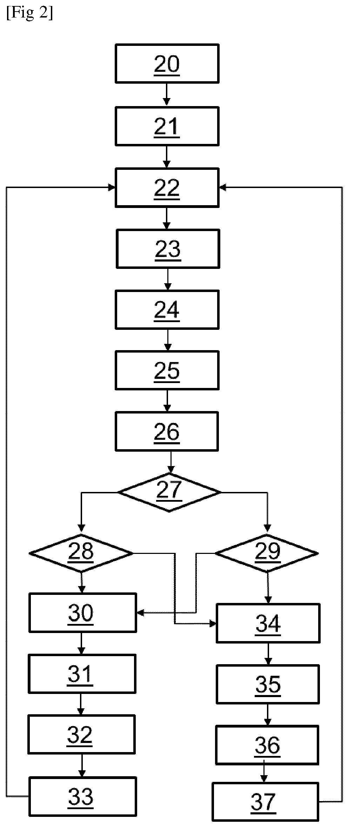

[Fig 2] illustrent schématiquement un mode de réalisation et un mode de mise en œuvre de l'invention.

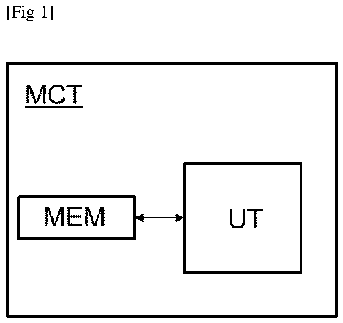

La figure 1 illustre un microcontrôleur MCT utilisé comme plateforme matérielle finale intégrant un réseau de neurones.

Le réseau de neurones est défini par des paramètres bien connus de l'homme du métier, tels que des poids.

Le réseau de neurones comprend une couche d'entrée, une couche de sortie et au moins une couche cachée entre la couche d'entrée et la couche de sortie.

Chaque couche peut comprendre au moins un canal. Chaque canal comprend au moins un poids.

Les poids de chaque couche sont des entiers définis selon un ou plusieurs formats. En particulier, chaque poids est défini selon sa valeur quantifiée, un pas de quantification et un point zéro.

En particulier, un poids est exprimé selon la formule suivante : $s_w \times (q_w - zp_w)$, où $s_w$ est le pas de quantification, $q_w$ est la valeur quantifiée du poids et $zp_w$ est le point zéro de la quantification.

Chaque couche peut être quantifiée uniformément ou bien par canal. Lorsque la couche est quantifiée uniformément, l'ensemble des poids d'une couche présente un même format. Lorsque la couche est quantifiée par canal, les poids d'un même canal présentent un même format. Néanmoins, les formats de poids de différents canaux peuvent ne pas être les mêmes. Chaque canal est donc quantifié indépendamment des autres canaux de la couche.

Les valeurs des poids du réseau de neurones ainsi que leur quantification ont été définies après une phase d'apprentissage effectuée avant que le réseau de neurones soit intégré dans le microcontrôleur MCT. La phase d'apprentissage peut être supervisée ou non. La phase d'apprentissage permet d'ajuster les poids du réseau de neurones. Pour ce faire, le réseau de neurones peut, par exemple, être exécuté en prenant en entrée des données déjà classifiées d'une base de données de référence.

En particulier, le microcontrôleur MCT comprend une mémoire MEM dans laquelle sont stockés les paramètres du réseau de neurones, notamment les poids des couches du réseau de neurones, c'est-à-dire les valeurs quantifiées des poids, leurs pas de quantification et leurs points zéro. La mémoire MEM est une mémoire non volatile.

Le microcontrôleur MCT comprend également une unité de traitement UT. L'unité de traitement UT est un processeur.

L'unité de traitement UT est configurée pour pouvoir exécuter le réseau de neurones à partir de données reçues en entrée du réseau de neurones.

L'exécution du réseau de neurones permet de délivrer des données en sortie en fonction des données reçues en entrée du réseau de neurones.

Par exemple, un réseau de neurones peut indiquer en sortie une classification des données reçues en entrée, ou bien générer un signal en sortie à partir d'un signal reçu en entrée du réseau de neurones.

Le réseau de neurones peut être mis en œuvre dans un environnement dans lequel le microcontrôleur MCT est placé. Cet environnement peut être différent de l'environnement dans lequel le réseau de neurones a été entraîné.

Afin d'adapter le réseau de neurones à l'environnement dans lequel il est mis en œuvre, l'unité de traitement UT est également configurée pour mettre à jour les poids du réseau de neurones en mettant en œuvre le procédé décrit ci-dessous en relation avec la figure 2. En particulier, le microcontrôleur MCT présente dans la mémoire MEM un produit programme d'ordinateur comprenant des instructions qui lorsqu'elles sont exécutées par l'unité de traitement UT, conduisent celle-ci à mettre en œuvre le procédé décrit ci-dessous.

En particulier, le procédé comprend une étape 20 dans laquelle l'unité de traitement UT met en œuvre le réseau de neurones plusieurs fois avec des données différentes. L'unité de traitement UT calcule une erreur totale selon une méthode dite en « batch » bien connue de l'homme du métier à partir des résultats en sortie du réseau de neurones suite aux différentes mises en œuvre de ce dernier.

Le procédé comprend ensuite une étape 21 dans laquelle l'unité de traitement UT calcule des gradients d'erreur en sortie des couches du réseau de neurones. En particulier, l'unité de traitement UT calcule les gradients d'erreur en utilisant une méthode de rétropropagation du gradient.

Le procédé comprend ensuite une succession d'étapes 22 à 37 qui est effectuée pour chaque couche à partir de la couche de sortie du réseau de neurones jusqu'à la couche d'entrée du réseau de neurones.

En particulier à l'étape 22, l'unité de traitement UT récupère les poids, dits poids initiaux, de la couche stockés dans la mémoire MEM.

Ensuite, à l'étape 23, l'unité de traitement UT procède à une mise à jour des poids de la couche. En particulier, pour chaque poids de la couche, l'unité de traitement UT réalise un premier calcul d'un poids corrigé dans le format en entier du poids initial stocké dans la mémoire MEM.

En particulier, l'unité de traitement UT calcule chaque poids corrigé en utilisant la formule suivante :

$$w_{q\,ij\,corr}^{(l)} = w_{q\,ij}^{(l)} + round\left(\frac{\lambda}{Scale(n)}\sum\frac{dE}{dw(l)ij}\right),$$

où $w_{q\,ij\,corr}^{(l)}$ est la valeur du poids corrigé, $w_{q\,ij}^{(l)}$ est la valeur du poids initial, $\lambda$ est un taux d'apprentissage, Scale(n) est un pas de quantification du poids, $\sum\frac{dE}{dw(l)ij}$ est une somme des gradients d'erreur par rapport aux poids, et la fonction round() est un arrondi à un entier supérieur ou inférieur.

Ainsi, chaque poids est mis à jour en lui ajoutant un arrondi de la somme des gradients d'erreur par rapport aux poids multiplié par un rapport entre le taux d'apprentissage $\lambda$ et le pas de quantification utilisé pour représenter les poids.

De préférence, l'arrondi utilisé pour déterminer la valeur du poids est un arrondi stochastique.

Le procédé comprend ensuite des étapes 24 à 36 permettant d'adapter la quantification des poids corrigés de la couche aux valeurs de ces poids corrigés.

En particulier, à l'étape 24, l'unité de traitement UT détermine un poids minimum et un poids maximum parmi au moins un ensemble des poids corrigés de la couche.

Plus particulièrement, l'unité de traitement UT détermine le poids minimum et le poids maximum de l'ensemble des poids corrigés de la couche.

En outre, l'unité de traitement UT détermine le poids minimum et le poids maximum des poids corrigés de chaque canal de la couche.

Ensuite, à l'étape 25, l'unité de traitement UT calcule des pas de quantification des poids corrigés de la couche.

En particulier, l'unité de traitement UT calcule un pas de quantification pour l'ensemble des poids corrigés de la couche en utilisant le poids minimum et le poids maximum de l'ensemble des poids corrigés de la couche. Pour ce faire, l'unité de traitement UT applique la formule suivante :

$$Scale_l(n+1) = \frac{Scale(n).(max_{ql}(n)\text{-}min_{ql}(n))}{maxq - minq},$$

où $min_{ql}(n)$ est la valeur minimum des poids corrigés de la couche, $max_{ql}(n)$ est la valeur maximum des poids corrigés de la couche, Scale(n) est la valeur du pas de quantification des poids initiaux de la couche, minq et maxq sont respectivement les valeurs minimales et maximales que les poids peuvent prendre selon le format des poids.

La valeur Scale(n) est récupérée dans la mémoire MEM par l'unité de traitement UT.

Par exemple, lorsque le format des poids est non signé et asymétrique sur 8 bits, la valeur minimale minq est égale à 0 et la valeur maximale maxq est égale à 255. Lorsque le format des poids est signé et symétrique sur 8 bits la valeur minimale minq est égale à -127 et la valeur maximale maxq est égale à 127.

En outre, pour chaque canal de la couche, l'unité de traitement UT calcule un pas de quantification des poids pour ce canal en utilisant le poids minimum et le poids maximum de ce canal. Pour ce faire, l'unité de traitement UT applique la formule :

$$Scale_c(n+1) = \frac{Scale(n).(max_{qc}(\text{n})-min_{qc}(\text{n}))}{maxq-minq},$$

où $min_{qc}(n)$ est la valeur minimum des poids corrigés du canal, $max_{qc}(n)$ est la valeur maximum des poids du canal, $Scale(n)$ est la valeur du pas de quantification des poids initiaux du canal, minq et maxq sont respectivement les valeurs minimales et maximales que les poids peuvent prendre.

Ensuite, à l'étape 26, l'unité de traitement UT calcule un critère de décision afin de savoir s'il est préférable de quantifier la couche uniformément ou bien par canal. Le critère de décision est calculé selon la formule :

$$C0 = \frac{Scale_l(n+1)}{\min(Scale_c(n+1))}$$, où $Scale_l(n+1)$ est le pas de quantification calculé pour l'ensemble de la couche et min $(Scale_c(n+1))$ est le pas de quantification le plus petit des pas de quantification calculées pour les différents canaux.

Ensuite, à l'étape 27, l'unité de traitement UT détermine si la couche est actuellement quantifiée uniformément ou bien par canal.

Si la couche est initialement quantifiée uniformément, alors l'unité de traitement UT effectue un test à l'étape 28. Dans ce test, l'unité de traitement UT compare la valeur du critère de décision à une valeur entière X comprise dans l'intervalle [6 ; 10]. Si le critère de décision est supérieur ou égal à la valeur X, alors l'unité de traitement UT détermine qu'il est préférable de quantifier la couche par canal pour les nouveaux poids corrigés. Sinon, l'unité de traitement UT considère qu'il est préférable de maintenir une quantification uniforme pour la couche.

En outre, si la couche est initialement quantifiée par canal, alors l'unité de traitement UT effectue un test à l'étape 29. Dans ce test, l'unité de traitement UT compare la valeur du critère de décision à une valeur entière Y comprise dans l'intervalle ]1 ; 4]. Si le critère de décision est inférieur ou égal à la valeur Y, alors l'unité de traitement UT détermine qu'il est préférable de quantifier la couche uniformément pour les nouveaux poids corrigés. Sinon, l'unité de traitement UT considère qu'il est préférable de maintenir une quantification par canal.

Les intervalles choisis pour les valeurs entières X et Y sont définis à partir d'expérimentations.

Ensuite, si la couche doit être quantifiée uniformément, alors l'unité de traitement UT procède à une quantification uniforme des poids de la couche aux étapes 30 à 33.

En particulier, à l'étape 30, l'unité de traitement UT procède à une mise à jour de la valeur du point zéro stockée dans la mémoire MEM. Pour ce faire, la valeur du point zéro Zp(n) est récupérée dans la mémoire MEM par l'unité de traitement UT. Puis, l'unité de traitement UT calcule le nouveau point zéro en utilisant la formule suivante :

$$Zp(n+1) = int(clip(round\left(\frac{\max(n)*minq-\min(n)*maxq}{\max(n)-\min(n)}\right), minq, maxq)),$$

où Zp(n+1) est la valeur du point zéro mise à jour, minq et maxq sont respectivement les valeurs minimales et maximales que les poids peuvent prendre, $min(n) = Scale(n).min_{ql}(n)-Zp(n)$ et $max(n) = Scale(n).max_{ql}(n)-Zp(n)$, Zp(n) étant la valeur du point zéro stockée dans la mémoire MEM, $min_{ql}(n)$ étant la valeur minimum des poids corrigés de la couche, $max_{ql}(n)$ étant la valeur maximum des poids corrigés de la couche.

Puis, à l'étape 31, l'unité de traitement UT procède à une mise à jour de la valeur du pas de quantification par l'unité de traitement UT selon la formule suivante :

$$Scale_l(n+1) = \frac{Scale(n).(max_{ql}(\text{n})-min_{ql}(\text{n}))}{maxq-minq},$$

où $Scale_l(n+1)$ est la valeur du pas de quantification mis à jour des poids de la couche, $min_{ql}(n)$ est la valeur minimum des poids corrigés de la couche, $max_{ql}(n)$ est la valeur maximum des poids corrigés de la couche, $Scale(n)$ est la valeur du pas de quantification des poids initiaux de la couche, minq et maxq sont respectivement les valeurs minimales et maximales que les poids peuvent prendre.

Il est à noter que ce pas de quantification $Scale_l(n+1)$ a déjà été calculé à l'étape 25. Ainsi, l'unité de traitement UT n'effectue pas nécessairement le calcul si la valeur Scale$_l$(n+1) a été stockée précédemment dans la mémoire MEM.

Ensuite, à l'étape 32, l'unité de traitement UT quantifie de nouveau la valeur des poids corrigées.

En particulier, la valeur quantifiée du poids corrigé peut être calculée en utilisant la formule :

$$w_{q\,ij\,corr}^{(l)}(n+1) = \text{round}((maxq - minq).(\frac{Scale(n).w_{qijcor}^{(l)}(n)-Zp(n)}{Scale(n).(max_q(n)-min_q(n))}) + Zp(n+1)),$$

où $w_{q\,ij\,corr}^{(l)}(n+1)$ est la valeur quantifiée du poids corrigé, $w_{q\,ij\,corr}^{(l)}(n)$ est la valeur du poids corrigé obtenue selon le premier calcul, $min_q(n)$ est la valeur minimum des poids corrigés de l'ensemble de poids, $max_q(n)$ est la valeur maximum des poids corrigés de l'ensemble de poids, minq et maxq sont respectivement les valeurs minimales et maximales que les poids peuvent prendre selon le format des poids, Scale(n) est l'ancienne valeur du pas de quantification stockée dans la mémoire, Zp(n+1) est la valeur du point zéro mise à jour et Zp(n) est l'ancienne valeur du point zéro stockée dans la mémoire.

Néanmoins, lorsque la quantification est symétrique, l'unité de traitement UT peut utiliser la formule :

$$w_{q\,ij\,corr}^{(l)}(n+1) = \text{round}(\frac{(2^{N-1}-1) * w_{q\,ij(n)}^{(l)}}{\max\,(|max_{ql}(n)|,|\,min_{ql}(n)|)}),$$

où $w_{q\,ij\,corr}^{(l)}(n+1)$ est la valeur quantifiée du poids corrigée, $w_{q\,ij\,corr}^{(l)}(n)$ est la valeur du poids corrigé obtenue selon le premier calcul, $min_{ql}(n)$ est la valeur minimum des poids corrigés de l'ensemble de poids, $max_{ql}(n)$ est la valeur maximum des poids corrigés de l'ensemble de poids, et N est le nombre du bit du format des poids (par exemple 8 bits).

De préférence, les valeurs pouvant être prises par l'expression $\frac{1}{\max\,(|max_{ql}(n)|,|\,min_{ql}(n)|)}$ pour chaque valeur possible de l'expression $\max\,(|max_{ql}(n)|,|\,min_{ql}(n)|)$ sont enregistrées dans une table de correspondance stockée dans la mémoire MEM.

Par exemple, les valeurs pouvant être prises par l'expression $\max\,(|max_{ql}(n)|,|\,min_{ql}(n)|)$ sont généralement proches de 127 lorsque la valeur des poids est représentée selon une quantification symétrique sur huit bits. En effet, les valeurs corrigées des poids sont généralement proches des valeurs de poids avant leur mise à jour. Les valeurs pouvant être prises par l'expression $\frac{1}{\max\,(|max_{ql}(n)|,|\,min_{ql}(n)|)}$ pour ces valeurs sont donc précalculées puis stockées dans la table de correspondance.

Ensuite, les valeurs des poids, du pas de quantification et du point zéro stockés dans la mémoire MEM sont ensuite remplacées à l'étape 33 par les valeurs nouvellement calculées.

Par ailleurs, si la couche doit être quantifiée par canal, alors l'unité de traitement UT procède à une quantification des poids pour chaque canal de la couche aux étapes 34 et 37.

En particulier, à l'étape 34, l'unité de traitement UT procède à une mise à jour de la valeur du point zéro stockée dans la mémoire MEM. Pour ce faire, la valeur du point zéro Zp(n) est récupérée dans la mémoire MEM par l'unité de traitement UT. Puis, l'unité de traitement UT calcule le nouveau point zéro en utilisant la formule suivante :

$$Zp(n+1) = int(clip(round\left(\frac{\max\,(n)*minq-\min\,(n)*maxq}{\max\,(n)-\min\,(n)}\right), minq, maxq)),$$

où Zp(n+1) est la valeur du point zéro mise à jour, minq et maxq sont respectivement les valeurs minimales et maximales que les poids peuvent prendre, $min(n) = Scale(n).min_{qc}(n)-Zp(n)$ et $max(n) = Scale(n).max_{qc}(n)-Zp(n)$, Zp(n) étant la valeur du point zéro stockée dans la mémoire MEM, $min_{qc}(n)$ étant la valeur minimum des poids corrigés du canal, $max_{qc}(n)$ étant la valeur maximum des poids du canal.

Puis, à l'étape 35, l'unité de traitement UT procède à une mise à jour de la valeur du pas de quantification par l'unité de traitement UT selon la formule suivante :

$$Scale_c(n + 1) = \frac{Scale(n).(max_{qc}(\text{n})-min_{qc}(\text{n}))}{maxq-minq},$$

où $Scale_c$(n+1) est la valeur du pas de quantification mis à jour des poids du canal, $min_{qc}$(n) est la valeur minimum des poids corrigés du canal, $max_{qc}$(n) est la valeur maximum des poids du canal, Scale(n) est la valeur du pas de quantification des poids initiaux du canal, minq et maxq sont respectivement les valeurs minimales et maximales que les poids peuvent prendre.

Il est à noter que ce pas de quantification $Scale_c$(n+1) a déjà été calculée à l'étape 25. Ainsi, l'unité de traitement UT n'effectue pas nécessairement le calcul si la valeur $Scale_c$(n+1) a été stockée dans la mémoire MEM précédemment.

Ensuite, à l'étape 36, l'unité de traitement UT quantifie de nouveau la valeur des poids corrigées.

En particulier, la valeur quantifiée du poids corrigé peut être calculée en utilisant la formule :

$$w^{(l)}_{q\,ij\,corr}(\text{n}+1) = \text{round}((maxq - minq).(\frac{Scale(n).w^{(l)}_{qijcor}(n)-Zp(n)}{Scale(n).(max_q(n)-min_q(n))}) + Zp(\text{n}+1)),$$

où $w^{(l)}_{q\,ij\,corr}(\text{n}+1)$ est la valeur quantifiée du poids corrigé, $w^{(l)}_{q\,ij\,corr}(\text{n})$ est la valeur du poids corrigé obtenue selon le premier calcul, $min_q$(n) est la valeur minimum des poids corrigés de l'ensemble de poids, $max_q$(n) est la valeur maximum des poids corrigés de l'ensemble de poids, minq et maxq sont respectivement les valeurs minimales et maximales que les poids peuvent prendre selon le format des poids, Scale(n) est l'ancienne valeur du pas de quantification stockée dans la mémoire, Zp(n+1) est la valeur du point zéro mise à jour et Zp(n) est l'ancienne valeur du point zéro stockée dans la mémoire.

Néanmoins, lorsque la quantification est symétrique, l'unité de traitement UT peut utiliser la formule :

$$w^{(l)}_{q\,ij\,corr}(\text{n}+1) = \text{round}(\frac{(2^{N-1}-1)*w^{(l)}_{q\,ij(n)}}{\max\,(|max_{qc}(n)|,|\,min_{qc}(n)|)}),$$

où $w^{(l)}_{q\,ij\,corr}(\text{n}+1)$ est la valeur quantifiée du poids corrigée, $w^{(l)}_{q\,ij\,corr}(\text{n})$ est la valeur du poids corrigé obtenue selon le premier calcul, $min_q$(n) est la valeur minimum des poids corrigés de l'ensemble de poids, $max_q$(n) est la valeur maximum des poids corrigés de l'ensemble de poids, et N est le nombre du bit du format des poids (par exemple 8 bits).

De même que précédemment, les valeurs pouvant être prises par l'expression $\frac{1}{\max\,(|max_{qc}(n)|,|\,min_{qc}(n)|)}$ pour chaque valeur possible de l'expression $\max\,(|max_{qc}(n)|,|\,min_{qc}(n)|)$ sont enregistrées dans une table de correspondance stockée dans la mémoire MEM.

Ensuite, les valeurs des poids, du pas de quantification et du point zéro stockées dans la mémoire MEM sont ensuite remplacées à l'étape 37 par les valeurs nouvellement calculées.

Après avoir effectué les étapes 22 à 37 pour une couche donnée du réseau de neurones, l'unité de traitement réitère ces étapes pour la couche qui précède directement ladite couche donnée dans le réseau de neurones.

Le calcul effectué pour la mise à jour des poids permet d'obtenir des poids directement en entier.

Un tel procédé de mise à jour permet donc d'éviter de passer par un format de poids en virgule flottante.

De ce fait, les ressources en mémoire pour effectuer la mise à jour sont limitées.

Le procédé de mise à jour des poids peut ainsi être mis en œuvre directement par la plateforme matérielle finale qui utilise le réseau de neurones. Par exemple, un tel procédé de mise à jour des poids peut être mis en œuvre directement par un microcontrôleur MCT.

Il est ainsi possible d'éviter d'effectuer la mise à jour des poids sur un serveur distant.

Le procédé de mise à jour des poids permet donc de limiter la consommation d'énergie, notamment lorsqu'il est mis en œuvre par la plateforme matérielle finale.

En outre, un tel procédé de mise à jour est rapide à mettre en œuvre du fait que le calcul est directement réalisé sur des poids en entier.

Une plateforme matérielle finale peut ainsi adapter régulièrement le réseau de neurones à partir de nouvelles données acquises dans un environnement dans lequel la plateforme matérielle finale est située.

L'adaptation de la quantification des poids corrigés permet de maintenir de bonnes performances d'exécution du réseau de neurones.

**Revendications**

1. Procédé de mise à jour d'un réseau de neurones artificiel comportant des poids initiaux stockés dans une mémoire (MEM) selon au moins un format en entier, procédé comprenant :

   - une détermination par une unité de traitement (UT) des gradients d'erreur en sortie des couches du réseau de neurones,
   - une récupération par l'unité de traitement (UT) des poids initiaux dans la mémoire (MEM),
   - une mise à jour des poids initiaux par l'unité de traitement (UT) comprenant, pour chaque poids initial, un premier calcul d'un poids corrigé, dans le format en entier de ce poids initial, selon la formule :

$$w^{(l)}_{q\,ij\,corr} = w^{(l)}_{q\,ij} + round\left(\frac{\lambda}{Scale(n)}\sum\frac{dE}{dw(l)ij}\right),$$

où $w^{(l)}_{q\,ij\,corr}$ est la valeur du poids corrigé, $w^{(l)}_{q\,ij}$ est la valeur du poids initial, $\lambda$ est un taux d'apprentissage, Scale(n) est un pas de quantification du poids, $\sum\frac{dE}{dw(l)ij}$ est une somme des gradients d'erreur par rapport aux poids, et la fonction round() est un arrondi à un entier supérieur ou inférieur,
   - un remplacement par l'unité de traitement (UT) de la valeur des poids initiaux stockés dans la mémoire (MEM) par la valeur des poids corrigés.

2. Procédé selon la revendication 1, dans lequel la mise à jour des poids initiaux est effectuée pour chaque couche du réseau de neurones à partir d'une dernière couche jusqu'à une première couche du réseau de neurones.

3. Procédé selon l'une quelconque des revendications 1 ou 2, dans lequel l'arrondi utilisé pour déterminer la valeur du poids corrigé est un arrondi stochastique.

4. Procédé selon l'une des revendications 1 à 3, dans lequel la mise à jour des poids comprend en outre une quantification des poids corrigés.

5. Procédé selon la revendication 4, dans lequel la quantification d'un poids corrigé d'une couche du réseau de neurones comprend une détermination d'un poids minimum et d'un poids maximum parmi un ensemble des poids corrigés de la couche, l'ensemble comprenant le poids corrigé à quantifier.

6. Procédé selon la revendication 5, dans lequel la quantification du poids corrigé comprend en outre :

   - une récupération par l'unité de traitement (UT) d'une valeur d'un point zéro associé au poids initial stockée dans la mémoire (MEM),
   - une mise à jour par l'unité de traitement (UT) de la valeur d'un point zéro associé au poids corrigé en utilisant la formule :

$$Zp(n+1) = int(clip(round\left(\frac{\max(n)*minq-\min(n)*maxq}{\max(n)-\min(n)}\right), minq, maxq)),$$

où Zp(n+1) est la valeur du point zéro mise à jour, minq et maxq étant respectivement les valeurs minimales et maximales que les poids peuvent prendre, $min(n) = Scale(n).min_q(n)-Zp(n)$ et $max(n) = Scale(n).max_q(n)-Zp(n)$, Zp(n) étant la valeur du point zéro stockée dans la mémoire (MEM), $min_q(n)$ est la valeur minimum des poids corrigés de l'ensemble de poids, $max_q(n)$ est la valeur maximum des poids corrigés de l'ensemble de poids,
   - un remplacement par l'unité de traitement (UT) de la valeur du point zéro stockée dans la mémoire (MEM) par la valeur du point zéro mise à jour.

7. Procédé selon la revendication 6, dans lequel la quantification du poids corrigé comprend en outre :

   - une récupération par l'unité de traitement (UT) d'une valeur d'un pas de quantification du poids initial stockée dans la mémoire (MEM),
   - une mise à jour de la valeur du pas de quantification par l'unité de traitement (UT) selon la formule :

$$Scale(n+1) = \frac{Scale(n).(max_q(\text{n})\text{-}min_q(\text{n}))}{maxq - minq},$$

où Scale(n+1) est la valeur du pas de quantification mis à jour, $min_q(n)$ est la valeur minimum des poids corrigés de l'ensemble de poids, $max_q(n)$ est la valeur maximum des poids corrigés de l'ensemble de poids, Scale(n) étant la valeur du pas de quantification stocké dans la mémoire (MEM), minq et maxq étant respectivement les valeurs minimales et maximales que les poids peuvent prendre,
   - un remplacement par l'unité de traitement (UT) de la valeur du pas de quantification stocké dans la mémoire (MEM) par la valeur du pas de quantification mis à jour.

8. Procédé selon la revendication 7, dans lequel la quantification du poids corrigé comprend un calcul d'une valeur quantifiée du poids corrigé, en utilisant la formule :

$$w^{(l)}_{q\,ij\,corr}(\text{n}+1) = \text{round}\left(\frac{(2^{n-1}-1) * w^{(l)}_{q\,ij\,corr}(\text{n})}{\max\left(|max_q(n)|, |\,min_q(n)|\right)}\right),$$

où $w^{(l)}_{q\,ij\,corr}(\text{n}+1)$ est la valeur quantifiée du poids corrigée, $w^{(l)}_{q\,ij\,corr}(\text{n})$ est la valeur du poids corrigé obtenue selon le premier calcul, $min_q(n)$ est la valeur minimum des poids corrigés de l'ensemble de poids, $max_q(n)$ est la valeur maximum des poids corrigés de l'ensemble de poids.

9. Procédé selon l'une des revendications 4 à 8, comprenant en outre, pour chaque couche, les étapes suivantes exécutées par l'unité de traitement :

   - un calcul d'un critère de décision, puis
   - une comparaison du critère de décision à une valeur seuil, puis
   - la quantification des poids corrigés qui est effectuée uniformément pour chaque poids corrigé de la couche ou indépendamment par canal de la couche selon un résultat de la comparaison.

10. Procédé selon la revendication 9, dans lequel le critère de décision est calculé selon la formule :

$$C0 = \frac{Scale_l(n+1)}{\min(Scale_c(n+1))},$$

où $Scale_l(n+1)$ est un pas de quantification pouvant être définie pour l'ensemble de la couche et min $(Scale_c(n+1))$ est un pas de quantification le plus petit parmi des pas de quantification pouvant être définis pour chaque canal de la couche.

11. Procédé selon la revendication 10, dans lequel, pour une couche initialement quantifiée uniformément, si le critère de décision est supérieur ou égal à une valeur seuil comprise entre six et dix, alors la quantification des poids corrigés est effectuée selon une quantification par canal.

12. Procédé selon l'une quelconque des revendications 10 ou 11, dans lequel, pour une couche initialement quantifiée par canal, si le critère de décision est inférieur ou égal à une valeur seuil supérieure à un et inférieure ou égale à quatre, alors la quantification des poids corrigés est effectuée selon une quantification uniforme pour chaque poids corrigés la couche.

**13.** Microcontrôleur comprenant :

- une mémoire (MEM) configurée pour stocker des poids initiaux des couches d'un réseau de neurones selon au moins un format en entier donné,
- une unité de traitement (UT) configurée pour effectuer :

  o une détermination des gradients d'erreur en sortie des couches du réseau de neurones,
  o une récupération des poids initiaux dans la mémoire (MEM),
  o une mise à jour des poids initiaux comprenant, pour chaque poids initial, un premier calcul d'un poids corrigé, dans le format en entier de ce poids initial, selon la formule :

$$w^{(l)}_{q\,ij\,corr} = w^{(l)}_{q\,ij} + round\left(\frac{\lambda}{Scale(n)}\sum\frac{dE}{dw(l)ij}\right),$$

où $w^{(l)}_{q\,ij\,corr}$ est la valeur du poids corrigé, $w^{(l)}_{q\,ij}$ est la valeur du poids initial, $\lambda$ est un taux d'apprentissage, Scale(n) est un pas de quantification du poids, $\sum\frac{dE}{dw(l)ij}$ est une somme des gradients d'erreur par rapport aux poids, et la fonction round() est un arrondi à un entier supérieur ou inférieur,
  o un remplacement de la valeur des poids initiaux stockés dans la mémoire (MEM) par la valeur des poids corrigés.

**14.** Microcontrôleur, comprenant une mémoire (MEM) configurée pour stocker des poids initiaux des couches d'un réseau de neurones selon au moins un format en entier donné, et une unité de traitement (UT) configurée pour mettre en œuvre le procédé selon l'une des revendications 1 à 12.

**15.** Produit programme d'ordinateur, comprenant des instructions qui, lorsque le programme est exécuté par une unité de traitement (UT), conduisent celle-ci à mettre en œuvre le procédé selon l'une des revendications 1 à 12.

[Fig 1]

[Fig 2]

Europäisches
Patentamt

European
Patent Office

Office européen
des brevets

**RAPPORT DE RECHERCHE EUROPEENNE**

Numéro de la demande

**EP 21 20 8259**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MAOLIN WANG ET AL: "NITI: Training Integer Neural Networks Using Integer-only Arithmetic", ARXIV.ORG, CORNELL UNIVERSITY LIBRARY, 201 OLIN LIBRARY CORNELL UNIVERSITY ITHACA, NY 14853, 28 septembre 2020 (2020-09-28), XP081772701, * abrégé; figure 1 * * section 1 * * section 3, lignes 1-4 * * section 3.1 * * section 3.2 * * section 3.3 * * section 5 * * Algorithme 2 * | 1-15 | INV. G06N3/08 G06N3/063 G06N3/04 |
| X | SHUANG WU ET AL: "Training and Inference with Integers in Deep Neural Networks", ARXIV.ORG, CORNELL UNIVERSITY LIBRARY, 201 OLIN LIBRARY CORNELL UNIVERSITY ITHACA, NY 14853, 13 février 2018 (2018-02-13), XP081221568, * section 1, lignes 14-21 * * section 3.3.1 * * section 3.3.4 * * figure 1 * * Equations (11)-(12) * | 1-15 | |
| A | WOLFGANG ROTH ET AL: "Resource-Efficient Neural Networks for Embedded Systems", ARXIV.ORG, CORNELL UNIVERSITY LIBRARY, 201 OLIN LIBRARY CORNELL UNIVERSITY ITHACA, NY 14853, 7 janvier 2020 (2020-01-07), XP081575463, * le document en entier * | 1-15 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 31 mars 2022 | Aoun, Marc |

EPO FORM 1503 03.82 (P04C02)